# EUROPEAN PATENT APPLICATION

(11) **EP 4 826 108 A1**
(43) Date of publication of application: **21.10.2026**
(21) Application number: 24904265.6
(22) Date of filing: 11.12.2024
(51) Int. Cl.: C23C 2/06, C23C 2/40, C23C 2/02, C22C 38/02, C22C 38/04, C22C 38/06, C22C 38/00, C21D 8/02

(54) **HOT-DIP ZN-MG-AL-BASED COATED STEEL SHEET AND METHOD OF MANUFACTURING SAME**

(30) Priority: 15.12.2023 KR 20230183822
(71) Applicant: POSCO Co., Ltd, Gyeongsangbuk-do 37859 (KR)
(72) Inventor: KIM, Young-Ha, Gwangyang-si, Jeollanam-do 57807 (KR); YOO, Bong-Hwan, Gwangyang-si, Jeollanam-do 57807 (KR); MIN, Kwang-Tai, Gwangyang-si, Jeollanam-do 57807 (KR); PAIK, Doo-Jin, Gwangyang-si, Jeollanam-do 57807 (KR)
(74) Representative: Meissner Bolte Partnerschaft mbB
(86) International application number: PCT/KR2024/020255
(87) International publication number: WO 2025/127700

(57) **Abstract**

One aspect of the present invention is to provide hot-dip Zn-Mg-Al-based coated steel sheet and a manufacturing method thereof. A preferred aspect of the present invention is to provide a hot-dip Zn-Mg-Al-based coated steel sheet having excellent plating adhesiveness, and a manufacturing method thereof.

## Description

### Technical Field

The present disclosure relates to a Zn-Mg-Al-based hot-dip galvanized steel sheet and a method for manufacturing the same.

### Background Art

Recently, in line with the trend toward carbon neutrality, there is a growing need to develop steel materials with excellent corrosion resistance that can better withstand harsh corrosive environments from an energy-saving perspective. To this end, zinc alloy-based coated steel sheets have been developed in which the corrosion resistance of the steel material is improved by adding elements such as aluminum (Al) and magnesium (Mg) to a zinc plating bath, and a representative example is a Zn-Mg-Al-based hot-dip galvanized steel sheet.

In addition, due to the ongoing demand for lighter vehicle bodies, it is common to add large amounts of elements such as Si, Mn, and Al to the steel to increase the strength of automotive steel sheets. However, these elements form oxides on the surface of the steel sheet during the annealing heat treatment process, which poses a problem of deteriorating the plating properties and adhesion during hot-dip galvanizing.

A representative technology for solving this problem is disclosed in Patent Document 1. Patent Document 1 proposes a technology for improving plating properties by controlling annealing conditions to control surface oxides, thereby controlling the composition and ratio of surface oxides to be advantageous for plating. However, Patent Document 1 has a problem in those mechanical properties such as fatigue strength are degraded due to a soft layer formed through dew point control.

Therefore, there is an urgent need for a technology that can improve the coating adhesion of hot-dip zinc-based coated steel sheets for automobiles, which have excellent corrosion resistance.

### [Prior Art Document]

(Patent Document 1) Korean Patent Publication No. 2012-7004749

### Summary of the Invention

### Technical Problem

An aspect of the present disclosure is to provide a Zn-Mg-Al-based hot-dip galvanized steel sheet and a method for manufacturing the same.

A preferred aspect of the present disclosure is to provide a Zn-Mg-Al-based hot-dip galvanized steel sheet with excellent coating adhesion and a method for manufacturing the same.

### Solution to Problem

An embodiment of the present disclosure provides a Zn-Mg-Al-based hot-dip galvanized steel sheet, which includes: a cold-rolled steel sheet comprising, by weight %, Si: 0.10% or more and less than 0.50%, Mn: 0.80-3.0%, and a remainder of Fe and unavoidable impurities; and a Zn-Mg-Al-based hot-dip galvanized coating layer formed on at least one surface of the cold-rolled steel sheet, wherein an Fe-Al intermetallic compound layer is formed at an interface between the cold-rolled steel sheet and the hot-dip galvanized coating layer, and an Fe reduced layer having an average thickness of 50-250 nm is formed directly under a surface of the cold-rolled steel sheet.

The cold-rolled steel sheet may further comprise at least one selected from C: 0.050-0.30%, P: 0.10% or less (excluding 0%), S: 0.010% or less (excluding 0%), Al: 0.010-0.10%, N: 0.0080% or less(excluding 0%), and B: 0.00010-0.0030%.

The Zn-Mg-Al-based hot-dip galvanized coating layer may comprise, by weight %, Mg: 1.0-13.0%, Al: 1.0-36.0%, and a remainder of Zn and unavoidable impurities.

The Zn-Mg-Al-based hot-dip galvanized coating layer may further comprise at least one selected from the following groups (a) to (h).
(a) at least one of Si: 0.5% or less and Ni: 0.5% or less
(b) at least one of Ca: 1.0% or less, La: 0.1% or less, Ce: 0.1% or less, Y: 0.1% or less, and Sr: 1.0% or less
(c) Ti: 0.1% or less
(d) W: 0.5% or less
(e) Cu: 2.0% or less
(f) at least one of Fe: 1.0% or less, Cr: 0.5% or less, Mn: 0.5% or less, and V: 0.5% or less
(g) at least one of B: 0.1% or less and P: 0.1% or less
(h) at least one of Sn: 1.0% or less, Sb: 1.0% or less, and Bi: 1.0% or less

The Fe-Al intermetallic compound layer may have an area fraction of 70% or more with respect to an entire surface area of the steel sheet.

Another embodiment of the present disclosure provides a method for manufacturing a Zn-Mg-Al-based hot-dip galvanized steel sheet, the method comprising: heating a slab comprising, by weight %, Si: 0.10% or more and less than 0.50%, Mn: 0.80-3.0%, and a remainder of Fe and unavoidable impurities; finish hot-rolling the heated slab to obtain a hot-rolled steel sheet; coiling the hot-rolled steel sheet at 600-680°C; cold-rolling the coiled hot-rolled steel sheet to obtain a cold-rolled steel sheet; oxidation heat-treating the cold-rolled steel sheet by passing it through a DFF (Direct Fired Furnace) facility such that an exit side temperature becomes 630-670°C; reduction heat-treating the oxidation heat-treated cold-rolled steel sheet in a reducing atmosphere having a dew point of at least - 60°C and less than -45°C; and obtaining a Zn-Mg-Al-based hot-dip galvanized steel sheet by immersing the reduction heat-treated cold-rolled steel sheet in a Zn-Mg-Al-based hot-dip plating bath, wherein the DFF facility comprises four or more zones, and is controlled to satisfy Equation 1 below. [Equation 1] 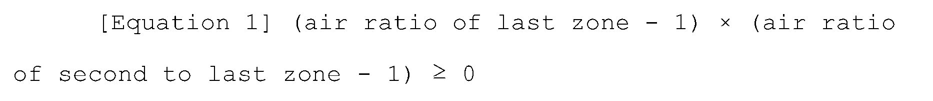 (air ratio of last zone - 1) × (air ratio of second to last zone - 1) ≥ 0

The slab may further comprise at least one selected from C: 0.050-0.30%, P: 0.10% or less (excluding 0%), S: 0.010% or less (excluding 0%), Al: 0.010-0.10%, N: 0.0080% or less(excluding 0%), and B: 0.00010-0.0030%.

The heating of the slab may be performed at 1100-1300°C.

The finish hot-rolling may be performed at 800-1000°C.

The reducing atmosphere may comprise, by volume %, hydrogen: 3-25% and a remainder of nitrogen.

Each of the four or more zones may have an air ratio of 1.0 or more.

The Zn-Mg-Al-based hot-dip plating bath may comprise, by weight %, Mg: 1.0-13.0%, Al: 1.0-36.0%, and a remainder of Zn and unavoidable impurities.

The Zn-Mg-Al-based hot-dip plating bath may further comprise at least one selected from the following groups (a) to (h).
(a) at least one of Si: 0.5% or less and Ni: 0.5% or less
(b) at least one of Ca: 1.0% or less, La: 0.1% or less, Ce: 0.1% or less, Y: 0.1% or less, and Sr: 1.0% or less
(c) Ti: 0.1% or less
(d) W: 0.5% or less
(e) Cu: 2.0% or less
(f) at least one of Fe: 1.0% or less, Cr: 0.5% or less, Mn: 0.5% or less, and V: 0.5% or less
(g) at least one of B: 0.1% or less and P: 0.1% or less
(h) at least one of Sn: 1.0% or less, Sb: 1.0% or less, and Bi: 1.0% or less

### Advantageous Effects of the Invention

According to an aspect of the present disclosure, a Zn-Mg-Al-based hot-dip galvanized steel sheet and a method for manufacturing the same can be provided.

According to a preferred aspect of the present disclosure, a Zn-Mg-Al-based hot-dip galvanized steel sheet with excellent coating adhesion and a method for manufacturing the same can be provided.

### Brief Description of the Drawings

FIG. 1 is a schematic diagram illustrating a Zn-Mg-Al-based hot-dip galvanized steel sheet according to an embodiment of the present disclosure.
FIG. 2 is a GDS (Glow Discharge Spectroscopy) depth profile showing the degree of enrichment of Si, Mn, and B on the surface of a steel sheet after reduction heat treatment in Comparative Example 1, which deviates from an embodiment of the present disclosure.
FIG. 3 is a GDS (Glow Discharge Spectroscopy) depth profile showing the degree of enrichment of Si, Mn, and B on the surface of a steel sheet after reduction heat treatment in Inventive Example 1 according to an embodiment of the present disclosure.
FIG. 4 is a photograph of Comparative Example 1, which deviates from an embodiment of the present disclosure, observed by TEM.
FIG. 5 is an EDS (Energy Dispersive Spectroscopy) mapping image for Comparative Example 1, which deviates from an embodiment of the present disclosure.
FIG. 6 is a photograph of Inventive Example 1 according to an embodiment of the present disclosure, observed by TEM.
FIG. 7 is an EDS (Energy Dispersive Spectroscopy) mapping image for Inventive Example 1 according to an embodiment of the present disclosure.
FIG. 8 is a photograph after a coating adhesion evaluation for Comparative Example 1, which deviates from an embodiment of the present disclosure.
FIG. 9 is a photograph after a coating adhesion evaluation for Inventive Example 1 according to an embodiment of the present disclosure.

### Best Mode for Invention

Hereinafter, a Zn-Mg-Al-based hot-dip galvanized steel sheet according to an embodiment of the present disclosure will be described.

An embodiment of the present disclosure provides a Zn-Mg-Al-based hot-dip galvanized steel sheet, which includes: a cold-rolled steel sheet comprising, by weight %, Si: 0.10% or more and less than 0.50%, Mn: 0.80-3.0%, and a remainder of Fe and unavoidable impurities; and a Zn-Mg-Al-based hot-dip galvanized coating layer formed on at least one surface of the cold-rolled steel sheet, wherein an Fe-Al intermetallic compound layer is formed at an interface between the cold-rolled steel sheet and the hot-dip galvanized coating layer, and an Fe reduced layer having an average thickness of 50-250 nm is formed directly under a surface of the cold-rolled steel sheet.

The cold-rolled steel sheet of the present disclosure preferably comprises, by weight %, Si: 0.10% or more and less than 0.50%, Mn: 0.8-3.0%, and a remainder of Fe and other unavoidable impurities.

### Si: 0.10% or more and less than 0.50%

Si is an important element that contributes to strength improvement through solid solution strengthening and plays a role in improving strength while suppressing deterioration of workability. If the content of Si is less than 0.10%, it is difficult to sufficiently obtain the above-described effects. If the content of Si is 0.50% or more, Si or Mn oxides in the form of a layer may be formed directly under the Fe oxide layer during oxidation heat treatment, which may deteriorate the coating adhesion. Therefore, it is preferable that the content of Si is in the range of 0.10% or more and less than 0.50%. The lower limit of the Si content is more preferably 0.12%, and even more preferably 0.15%. The upper limit of the Si content is more preferably 0.45%, and even more preferably 0.4%.

### Mn: 0.80-3.0%

Mn is an element that contributes to strength improvement by solid solution strengthening and at the same time improves the hardenability of the austenite phase, and effectively contributes to the stabilization of strength. If the content of Mn is less than 0.80%, it is difficult to sufficiently obtain the above-described effects. If the content of Mn exceeds 3.0%, workability may be deteriorated. Therefore, it is preferable that the content of Mn is in the range of 0.80-3.0%. The lower limit of the Mn content is more preferably 1.50%. The upper limit of the Mn content is more preferably 2.50%.

The cold-rolled steel sheet of the present disclosure is not particularly limited in terms of its alloy composition other than Si and Mn, and the alloy composition of any cold-rolled steel sheet used in the art can be applied. However, as an example, the cold-rolled steel sheet of the present disclosure may further comprise at least one selected from C: 0.050-0.30%, P: 0.10% or less (excluding 0%), S: 0.010% or less (excluding 0%), Al: 0.010-0.10%, N: 0.0080% or less(excluding 0%), and B: 0.00010-0.0030%.

The remaining component of the cold-rolled steel sheet of the present disclosure is iron (Fe), and it may contain some unintentional and unavoidable impurities incorporated during the manufacturing process. Since these impurities are known to any person skilled in the art of ordinary manufacturing processes, all of their details are not specifically mentioned in this specification.

Meanwhile, the cold-rolled steel sheet of the present disclosure may have a thickness of 0.6-2.3 mm, and through this, it can be preferably used as an automotive steel sheet for impact structural members.

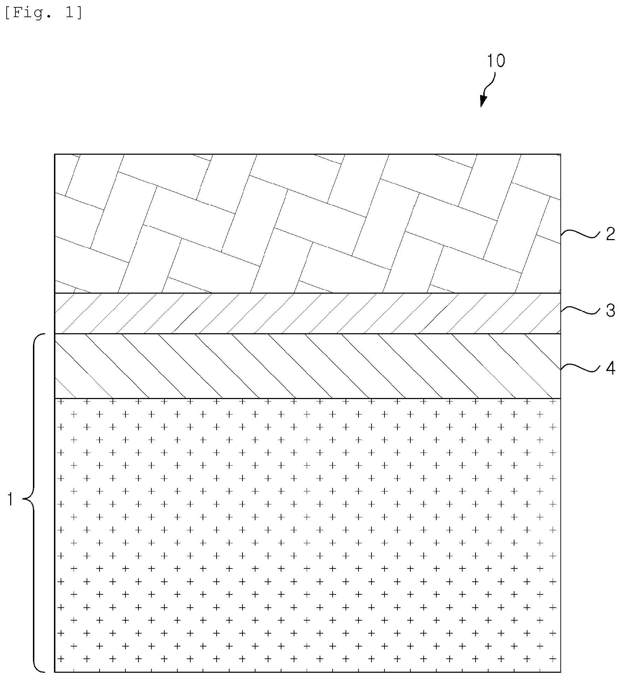

FIG. 1 is a schematic diagram illustrating a Zn-Mg-Al-based hot-dip galvanized steel sheet according to an embodiment of the present disclosure.

The Zn-Mg-Al-based hot-dip galvanized steel sheet (10) of the present disclosure preferably includes a Zn-Mg-Al-based hot-dip galvanized coating layer (2) formed on at least one surface of the aforementioned cold-rolled steel sheet (1). In the present disclosure, the type of the Zn-Mg-Al-based hot-dip galvanized coating layer is not particularly limited, and any type of Zn-Mg-Al-based hot-dip galvanized coating layer commonly used in the art can be applied. However, as an example, the Zn-Mg-Al-based hot-dip galvanized coating layer may comprise, by weight %, Mg: 1.0-13.0%, Al: 1.0-36.0%, and a remainder of Zn and other unavoidable impurities.

The Zn-Mg-Al-based hot-dip galvanized coating layer may further comprise at least one selected from the following groups (a) to (h).

However, since the elements in each of the following groups are not essential for achieving the object of the present disclosure, the lower limit of their content is not limited. Therefore, even if not specifically mentioned below, the lower limit of the content of each element may be 0%.
(a) at least one of Si: 0.5% or less and Ni: 0.5% or less
(b) at least one of Ca: 1.0% or less, La: 0.1% or less, Ce: 0.1% or less, Y: 0.1% or less, and Sr: 1.0% or less
(c) Ti: 0.1% or less
(d) W: 0.5% or less
(e) Cu: 2.0% or less
(f) at least one of Fe: 1.0% or less, Cr: 0.5% or less, Mn: 0.5% or less, and V: 0.5% or less
(g) at least one of B: 0.1% or less and P: 0.1% or less
(h) at least one of Sn: 1.0% or less, Sb: 1.0% or less, and Bi: 1.0% or less

### (a) at least one of Si: 0.5% or less and Ni: 0.5% or less

Si has the effect of preventing Fe-Zn alloying due to the formation of interfacial Mg2Si, and can prevent excessive formation of the Fe-Al alloy phase. However, if its content exceeds 0.5%, the melting point of the plating bath increases, and there is a concern that brittleness may increase due to excessive formation of Mg2Si. Ni has the effect of preventing Fe diffusion by forming an Al-Ni alloy phase, but if its content exceeds 0.5%, there may be a problem of an excessive increase in the cost of auxiliary materials.

### (b) at least one of Ca: 1.0% or less, La: 0.1% or less, Ce: 0.1% or less, Y: 0.1% or less, and Sr: 1.0% or less

Ca, La, Ce, Y, and Sr have the effect of preventing Mg oxidation in the plating bath by forming an oxide film. However, if their contents exceed 1.0%, 0.1%, 0.1%, 0.1%, and 1.0%, respectively, Ca may cause a problem of increased dross due to an increase in oxides, and La, Ce, Y, and Sr may cause a problem of deteriorated plating properties due to an increase in the viscosity of the plating bath.

### (c) Ti: 0.1% or less

Ti has the effect of refining crystal grains (spangles) as Ti-Al intermetallic compounds act as nucleation sites. However, if its content exceeds 0.1%, the melting point of the plating bath may increase, and there may be a problem of an increase in dross.

### (d) W: 0.5% or less

W has the effect of improving corrosion resistance by forming W oxides on the surface. However, if its content exceeds 0.5%, there may be a problem of an increase in the melting point of the plating bath.

### (e) Cu: 2.0% or less

Cu has the effect of lowering the hardness of the coating layer due to the formation of an Al-Cu eutectic structure. However, if its content exceeds 2.0%, there may be a problem of coarsening of spangles.

### (f) at least one of Fe: 1.0% or less, Cr: 0.5% or less, Mn: 0.5% or less, and V: 0.5% or less

Fe, Cr, Mn, and V have the effect of preventing electrode degradation by suppressing alloying between zinc and the welding electrode due to rapid liquid phase disappearance. However, if their contents exceed 1.0%, 0.5%, 0.5%, and 0.5%, respectively, there may be a problem of an excessive increase in the melting point of the plating bath.

### (g) at least one of B: 0.1% or less and P: 0.1% or less

B and P have the effect of suppressing LME cracks in the weld zone. However, if their contents each exceed 0.1%, there may be a problem of an increase in dross formation.

### (h) at least one of Sn: 1.0% or less, Sb: 1.0% or less, and Bi: 1.0% or less

Sn, Sb, and Bi have the effect of making spangles uniform and improving the durability of the pot by lowering the temperature of the plating bath. However, if their contents each exceed 1.0%, there may be a problem of coarsening of spangles.

An Fe-Al intermetallic compound layer (3) is preferably formed at the interface between the cold-rolled steel sheet (1) and the Zn-Mg-Al-based hot-dip galvanized coating layer (2). The Fe-Al intermetallic compound layer plays a role in improving coating adhesion and helping to suppress the phenomenon of coating layer peeling. The Fe-Al intermetallic compound layer may have an area fraction of 70% or more with respect to the entire surface area of the steel sheet. If the area fraction of the Fe-Al intermetallic compound layer is less than 70%, the coating adhesion may be deteriorated. The area fraction of the Fe-Al intermetallic compound layer is more preferably 80% or more, even more preferably 90% or more, and theoretically, or if possible in the manufacturing process, it is most preferable that the area fraction of the Fe-Al intermetallic compound layer is 100%. In the present disclosure, the type of the Fe-Al intermetallic compound layer is not particularly limited, but it may be, for example, an FeAl3 layer.

As an example, the Fe-Al intermetallic compound layer may have a film-like form when the steel sheet is viewed from the side, and through this, the coating adhesion can be improved.

An Fe reduced layer (4) having an average thickness of 50-250 nm may be formed directly under the surface of the cold-rolled steel sheet (1). The Fe reduced layer is formed as the Fe oxide layer, which was formed by oxidation heat treatment, undergoes a reduction heat treatment process again. The Fe oxide layer is widely known to deteriorate coating adhesion. In the present disclosure, by reducing the Fe oxide layer to form an Fe reduced layer, it is possible to improve coating adhesion and suppress the phenomenon of coating layer peeling. The Fe reduced layer preferably has an average thickness of 50-250 nm. If the average thickness of the Fe reduced layer is less than 50 nm, the above-described effects cannot be sufficiently obtained. If the average thickness of the Fe reduced layer exceeds 250 nm, Si or Mn oxides may be formed directly thereunder as the Fe reduced layer is not completely reduced, and as a result, the coating adhesion may be deteriorated.

The Zn-Mg-Al-based hot-dip galvanized steel sheet of the present disclosure provided as described above can secure excellent coating adhesion.

Hereinafter, a method for manufacturing a Zn-Mg-Al-based hot-dip galvanized steel sheet according to an embodiment of the present disclosure will be described.

First, a slab satisfying the above-described alloy composition is heated. In the present disclosure, the slab heating process is not particularly limited, and conventional conditions applied in the art can be used. However, as an example, the heating of the slab may be performed at 1100-1300°C.

Subsequently, the heated slab is finish hot-rolled to obtain a hot-rolled steel sheet. In the present disclosure, the finish hot-rolling process is not particularly limited, and conventional conditions applied in the art can be used. However, as an example, the finish hot-rolling may be performed at 800-1000°C.

Subsequently, the hot-rolled steel sheet is coiled at 600-680°C. If the coiling temperature is less than 600°C, a problem of shape deterioration may occur. If the coiling temperature exceeds 680°C, a problem of scale dust generation may occur. Therefore, it is preferable that the coiling temperature is in the range of 600-680°C. The lower limit of the coiling temperature is more preferably 610°C, and even more preferably 620°C. The upper limit of the coiling temperature is more preferably 670°C, and even more preferably 650°C.

Subsequently, the coiled hot-rolled steel sheet is cold-rolled to obtain a cold-rolled steel sheet. In the present disclosure, the cold-rolling process is not particularly limited, and conventional conditions applied in the art can be used.

Subsequently, the cold-rolled steel sheet is passed through a DFF (Direct Fired Furnace) facility and subjected to oxidation heat treatment such that the exit side temperature becomes 630-670°C. The oxidation heat treatment is for forming an internal oxide layer and, at the same time, oxidizing Fe present on the surface layer of the cold-rolled steel sheet to form an Fe oxide layer. The Fe oxide layer can serve as a diffusion barrier that can suppress the diffusion of elements such as Si or Mn to the surface of the steel sheet during the heat treatment process. If the exit side temperature of the DFF facility is less than 630°C, there is a problem that the Fe oxide layer is not formed or is formed very thinly, so that the intended effect of suppressing the enrichment of alloying elements becomes insignificant. If the exit side temperature of the DFF facility exceeds 670°C, the excessively formed Fe oxide layer may be detached by friction with rolls and picked up by the rolls, which may cause defects such as dents on the surface of the steel sheet. Therefore, it is preferable that the exit side temperature of the DFF facility is in the range of 630-670°C. The lower limit of the exit side temperature of the DFF facility is more preferably 635°C, and even more preferably 640°C. The upper limit of the exit side temperature of the DFF facility is more preferably 665°C, and even more preferably 660°C.

At this time, the DFF facility preferably includes four or more zones and is controlled to satisfy Equation 1 below. Equation 1 below is for ensuring that all supplied fuel is combusted and the remaining excess oxygen oxidizes the Fe present on the surface layer of the cold-rolled steel sheet. Furthermore, it is for controlling the process so that oxides are trapped directly under the surface layer of the steel sheet instead of being enriched on the surface. The Fe oxide layer formed through this process is then changed to an Fe reduced layer through a subsequent reduction process, and when the entire Fe oxide layer is reduced, the oxides present on the surface layer of the steel sheet are removed, allowing the Fe-Al intermetallic compound layer to be formed uniformly. If Equation 1 below is not satisfied, the distribution of the Fe-Al intermetallic compound layer may become nonuniform, and as a result, it may be difficult for the Fe-Al intermetallic compound layer to have an area fraction of 70% or more with respect to the entire surface area of the steel sheet. In addition, some particles within the Fe-Al intermetallic compound layer may grow coarsely. Meanwhile, in the present disclosure, as long as Equation 1 below is satisfied, the object of the present disclosure can be achieved, and therefore, the upper limit of the value of Equation 1 is not particularly limited. [Equation 1] 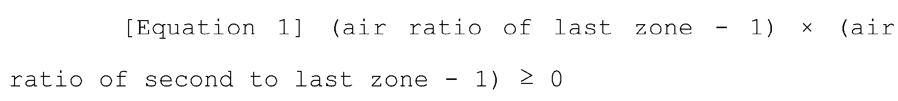 (air ratio of last zone - 1) × (air ratio of second to last zone - 1) ≥ 0

Meanwhile, each of the four or more zones may have an air ratio of 1.0 or more, and by controlling in this way, Fe oxidation can be facilitated.

Subsequently, the oxidation heat-treated cold-rolled steel sheet is subjected to reduction heat treatment in a reducing atmosphere with a dew point of at least -60°C and less than -45°C. The reduction heat treatment is for reducing the Fe oxide layer formed by the oxidation heat treatment to form an Fe reduced layer. Through this, if the dew point temperature is less than -60°C, the plating properties may be deteriorated. If the dew point temperature is -45°C or more, a problem may occur in that the amount of oxides increases due to the selective oxidation transition zone, leading to a deterioration of plating properties. Therefore, it is preferable that the dew point temperature is in the range of at least -60°C and less than -45°C. The lower limit of the dew point temperature is more preferably -55°C. The upper limit of the dew point temperature is more preferably -46°C, and even more preferably -47°C.

Meanwhile, in the present disclosure, the conditions of the reducing atmosphere are not particularly limited, and conventional conditions applied in the art can be used. However, as an example, it may be a gas atmosphere comprising, by volume %, hydrogen: 3-25% and a remainder of nitrogen.

Subsequently, the reduction heat-treated cold-rolled steel sheet is immersed in a Zn-Mg-Al-based hot-dip plating bath to obtain a Zn-Mg-Al-based hot-dip galvanized steel sheet. In the present disclosure, the hot-dip galvanizing is not particularly limited, and conventional conditions applied in the art can be used. However, as an example, the Zn-Mg-Al-based hot-dip plating bath may comprise, by weight %, Mg: 1.0-13.0%, Al: 1.0-36.0%, and a remainder of Zn. An Fe-Al intermetallic compound layer can be formed by the hot-dip galvanizing process. In the present disclosure, the type of the Fe-Al intermetallic compound layer is not particularly limited. However, as an example, it may be formed by the reaction of Al contained in the plating bath and Fe eluted from the base steel sheet.

### Mode for Invention

Hereinafter, the present disclosure will be described in more detail through examples. However, the examples described below are only for explaining the present disclosure in more detail, and do not limit the scope of the present disclosure.

### (Examples)

A slab (C: 0.08%, P: 0.02%, S: 0.003%, Al: 0.03%, N: 0.004%, B: 0.0005%) having the Si and Mn contents shown in Table 1 below was heated at 1200°C, and then the heated slab was finish hot-rolled at 900°C to obtain a hot-rolled steel sheet. Subsequently, the hot-rolled steel sheet was coiled under the conditions shown in Table 1 below, and then the coiled hot-rolled steel sheet was cold-rolled to obtain a cold-rolled steel sheet with a thickness of 1.2 mm. Subsequently, the cold-rolled steel sheet was passed through a DFF (Direct Fired Furnace) facility (line speed: 90 mpm) under the conditions shown in Table 2 below for oxidation heat treatment. Subsequently, the oxidation heat-treated cold-rolled steel sheet was subjected to reduction heat treatment in a reducing atmosphere (hydrogen: 5 vol% and a remainder of nitrogen) under the conditions shown in Table 1 below, and the reduction heat-treated cold-rolled steel sheet was immersed in a Zn-Mg-Al-based hot-dip plating bath (Al: 2.5%, Mg: 3.0%, and a remainder of Zn) to manufacture a Zn-Mg-Al-based hot-dip galvanized steel sheet having the composition shown in Table 2 below.

For the Zn-Mg-Al-based hot-dip galvanized steel sheet manufactured as described above, the formation and area fraction of the Fe-Al intermetallic compound layer, and the formation and average thickness of the Fe reduced layer were measured, and the results are shown in Table 2 below.

The formation and area fraction of the Fe-Al intermetallic compound layer were determined by photographing the surface of the Fe-Al intermetallic compound layer using a Scanning Electron Microscopy, then measuring 10 arbitrary locations with an Image Analyzer, and calculating the average value.

The formation and average thickness of the Fe reduced layer were determined by measuring 10 arbitrary locations on the side surface of the Zn-Mg-Al-based hot-dip galvanized steel sheet using a Transmission Electron Microscopy, and then calculating the average value.

In addition, the coating adhesion of the Zn-Mg-Al-based hot-dip galvanized steel sheet was measured, and the results are shown in Table 2 below.

To evaluate the coating adhesion by assessing the peeling of the coating layer, a specimen of 30 mm × 80 mm was collected from the hot-dip galvanized steel sheet. Then, a structural adhesive was applied to the specimen, and it was cured in an oven at 170°C for 20 minutes, followed by 90° bending in a bending jig. Subsequently, it was visually checked whether the coating layer was attached to the surface where the structural adhesive was applied to determine whether the coating layer had peeled.

**[Table 1]**

| Classification | Alloy Composition (weight%) | | Coiling Temperature (°C) | DFF Exit Side Temperature (°C) | Dew Point Temperature (°C) | Satisfaction of Equation 1 |
|---|---|---|---|---|---|---|
| | Si | Mn | | | | |
| Inventive Example 1 | 0.24 | 0.89 | 602 | 648 | -50 | Satisfied |
| Inventive Example 2 | 0.27 | 0.81 | 615 | 652 | -48 | Satisfied |
| Inventive Example 3 | 0.25 | 0.91 | 613 | 666 | -47 | Satisfied |
| Inventive Example 4 | 0.29 | 1.35 | 666 | 656 | -48 | Satisfied |
| Comparative Example 1 | 0.30 | 1.31 | 625 | 645 | -46 | Not satisfied |
| Comparative Example 2 | 0.21 | 1.12 | 624 | 653 | -51 | Not satisfied |
| Comparative Example 3 | 0.24 | 1.30 | 632 | 667 | -49 | Not satisfied |
| Comparative Example 4 | 0.25 | 1.16 | 648 | 610 | -52 | Satisfied |
| Comparative Example 5 | 0.31 | 0.92 | 636 | 703 | -48 | Satisfied |
| [Equation 1] (air ratio of last zone - 1) × (air ratio of second to last zone - 1) ≥ 0 | | | | | | |

**[Table 2]**

| Classification | Fe-Al intermetallic compound layer | | Fe reduced layer | | Peeling of coating layer |
|---|---|---|---|---|---|
| | Formation | Area fraction (%) | Formation | Average thickness (nm) | |
| Inventive Example 1 | Formed | 96 | Formed | 115 | Not peeled |
| Inventive Example 2 | Formed | 98 | Formed | 152 | Not peeled |
| Inventive Example 3 | Formed | 97 | Formed | 187 | Not peeled |
| Inventive Example 4 | Formed | 95 | Formed | 106 | Not peeled |
| Comparative Example 1 | Formed | 11 | Not formed | 0 | Peeled |
| Comparative Example 2 | Not formed | 0 | Not formed | 0 | Peeled |
| Comparative Example 3 | Not formed | 0 | Not formed | 0 | Peeled |
| Comparative Example 4 | Formed | 40 | Formed | 30 | Peeled |
| Comparative Example 5 | Formed | 84 | Formed | 370 | Peeled |

As can be seen from Tables 1 and 2, in the case of Inventive Examples 1 to 4, which satisfy the manufacturing conditions proposed by the present disclosure, it can be seen that an Fe-Al intermetallic compound layer with an appropriate area fraction and an Fe reduced layer with an appropriate thickness are formed, resulting in good plating properties.

On the other hand, in the case of Comparative Examples 1 to 3, since Equation 1 was not satisfied, the Fe-Al intermetallic compound layer was not formed or was formed in a small amount, and the Fe reduced layer was not formed, indicating poor plating properties.

In the case of Comparative Example 4, it can be seen that the Fe-Al intermetallic compound layer and the Fe reduced layer were not sufficiently formed due to the low exit side temperature of the DFF, resulting in poor plating properties.

In the case of Comparative Example 5, it can be seen that the Fe-Al intermetallic compound layer and the Fe reduced layer were excessively formed due to the high exit side temperature of the DFF, resulting in poor plating properties.

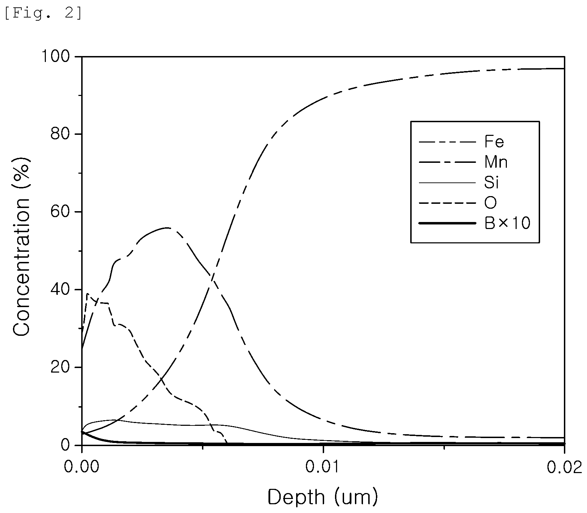

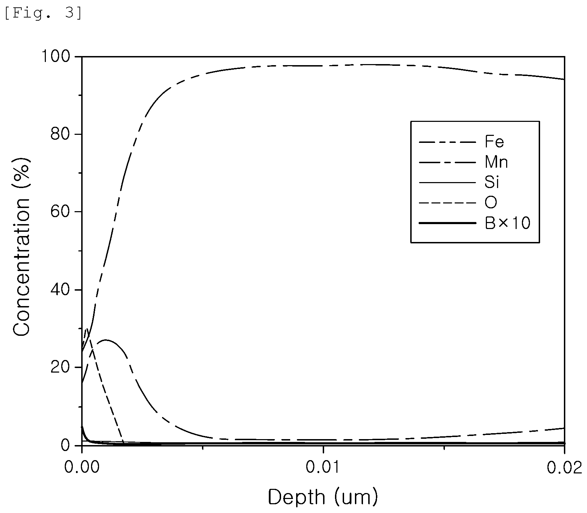

FIG. 2 is a GDS (Glow Discharge Spectroscopy) depth profile showing the degree of enrichment of Si, Mn, and B on the surface of the steel sheet after reduction heat treatment in Comparative Example 1, and FIG. 3 is a GDS (Glow Discharge Spectroscopy) depth profile showing the degree of enrichment of Si, Mn, and B on the surface of the steel sheet after reduction heat treatment in Inventive Example 1. As can be seen from FIGS. 2 and 3, in the case of Inventive Example 1, the formation of surface oxides was suppressed, whereas in the case of Comparative Example 1, a large amount of surface oxides was formed.

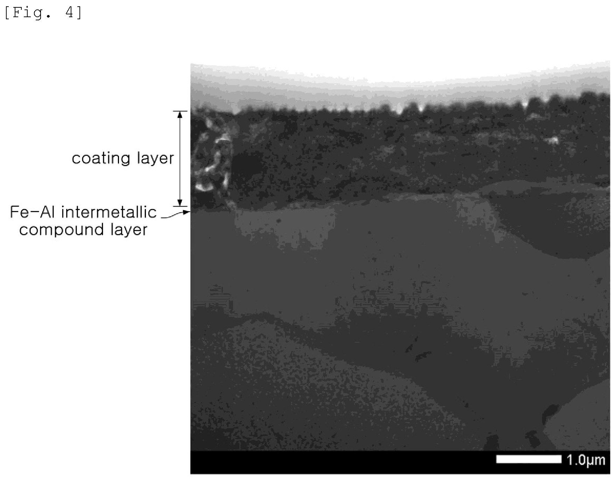

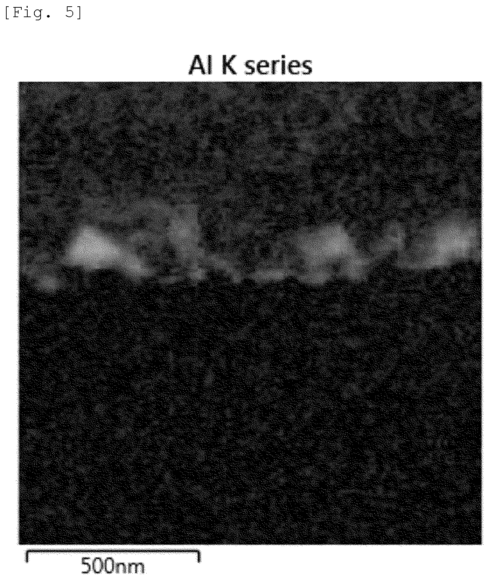

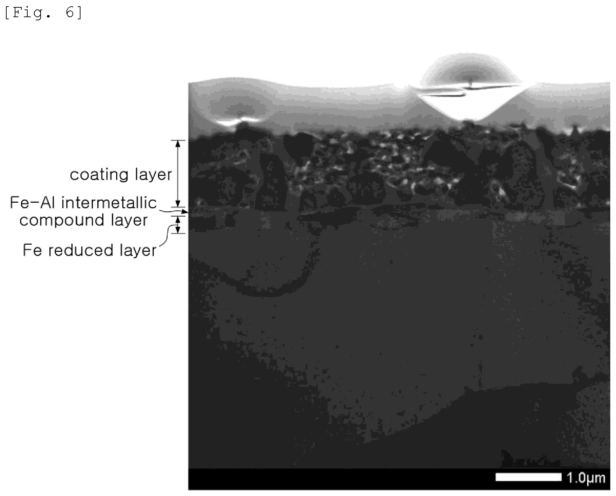

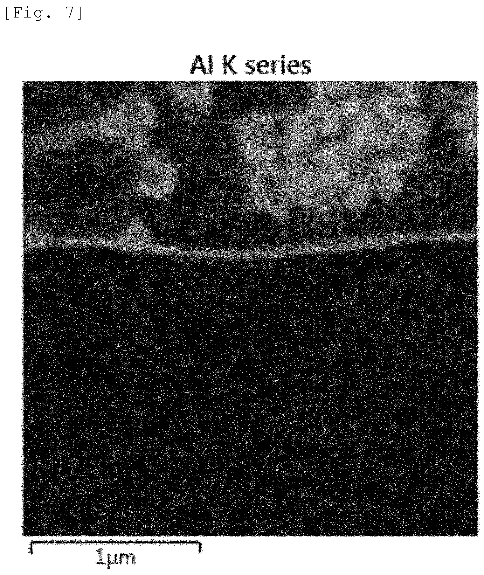

FIG. 4 is a photograph of Comparative Example 1 observed by TEM, and FIG. 5 is an EDS (Energy Dispersive Spectroscopy) mapping image for Comparative Example 1. FIG. 6 is a photograph of Inventive Example 1 observed by TEM, and FIG. 7 is an EDS (Energy Dispersive Spectroscopy) mapping image for Inventive Example 1. As can be seen from FIGS. 4 to 7, in the case of Comparative Example 1, not only is there no Fe reduced layer, but the Fe-Al intermetallic compound layer is also formed non-uniformly. On the other hand, in the case of Inventive Example 1, not only is there an Fe reduced layer in the cold-rolled steel sheet, but also, with particular reference to FIG. 7, it can be seen that the Fe-Al intermetallic compound layer is densely formed in a film-like form between the cold-rolled steel sheet and the Zn-Mg-Al-based hot-dip galvanized coating layer.

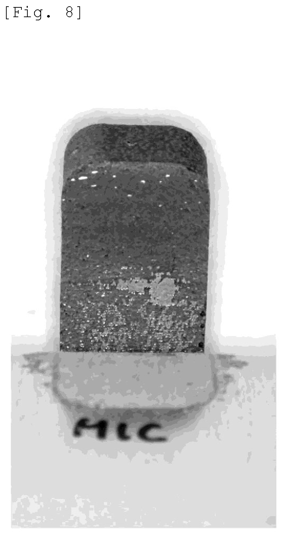

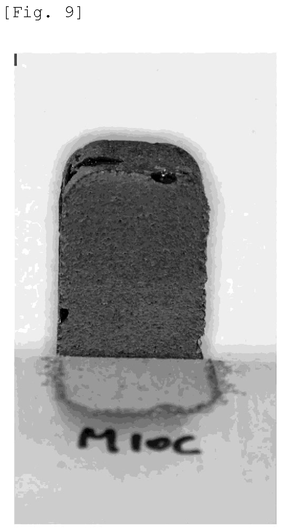

FIG. 8 is a photograph after a coating adhesion evaluation for Comparative Example 1, and FIG. 9 is a photograph after a coating adhesion evaluation for Inventive Example 1. As can be seen from FIGS. 8 and 9, in the case of Comparative Example 1, peeling of the coating layer occurred, whereas in the case of Inventive Example 1, the coating layer did not peel.

### [Description of Reference Characters]

1: cold-rolled steel sheet
2: Zn-Mg-Al-based hot-dip galvanized coating layer
3: Fe-Al intermetallic compound layer
4: Fe reduced layer
10: Zn-Mg-Al-based hot-dip galvanized steel sheet

## Claims

1. A Zn-Mg-Al-based hot-dip galvanized steel sheet, comprising: a cold-rolled steel sheet comprising, by weight %, Si: 0.10% or more and less than 0.50%, Mn: 0.80-3.0%, and a remainder of Fe and unavoidable impurities; a Zn-Mg-Al-based hot-dip galvanized coating layer formed on at least one surface of the cold-rolled steel sheet; an Fe-Al intermetallic compound layer formed at an interface between the cold-rolled steel sheet and the hot-dip galvanized coating layer; and an Fe reduced layer having an average thickness of 50-250 nm formed directly under a surface of the cold-rolled steel sheet.

2. The Zn-Mg-Al-based hot-dip galvanized steel sheet of claim 1, wherein the cold-rolled steel sheet further comprises at least one selected from C: 0.050-0.30%, P: 0.10% or less (excluding 0%), S: 0.010% or less (excluding 0%), Al: 0.010-0.10%, N: 0.0080% or less(excluding 0%), and B: 0.00010-0.0030%.

3. The Zn-Mg-Al-based hot-dip galvanized steel sheet of claim 1, wherein the Zn-Mg-Al-based hot-dip galvanized coating layer comprises, by weight %, Mg: 1.0-13.0%, Al: 1.0-36.0%, and a remainder of Zn and unavoidable impurities.

4. The Zn-Mg-Al-based hot-dip galvanized steel sheet of claim 3, wherein the Zn-Mg-Al-based hot-dip galvanized coating layer further comprises at least one selected from the following groups (a) to (h): (a) at least one of Si: 0.5% or less and Ni: 0.5% or less; (b) at least one of Ca: 1.0% or less, La: 0.1% or less, Ce: 0.1% or less, Y: 0.1% or less, and Sr: 1.0% or less; (c) Ti: 0.1% or less; (d) W: 0.5% or less; (e) Cu: 2.0% or less; (f) at least one of Fe: 1.0% or less, Cr: 0.5% or less, Mn: 0.5% or less, and V: 0.5% or less; (g) at least one of B: 0.1% or less and P: 0.1% or less; and (h) at least one of Sn: 1.0% or less, Sb: 1.0% or less, and Bi: 1.0% or less.

5. The Zn-Mg-Al-based hot-dip galvanized steel sheet of claim 1, wherein the Fe-Al intermetallic compound layer has an area fraction of 70% or more with respect to an entire surface area of the cold-rolled steel sheet.

6. A method for manufacturing a Zn-Mg-Al-based hot-dip galvanized steel sheet, the method comprising: heating a slab comprising, by weight %, Si: 0.10% or more and less than 0.50%, Mn: 0.80-3.0%, and a remainder of Fe and unavoidable impurities; finish hot-rolling the heated slab to obtain a hot-rolled steel sheet; coiling the hot-rolled steel sheet at 600-680°C; cold-rolling the coiled hot-rolled steel sheet to obtain a cold-rolled steel sheet; oxidation heat-treating the cold-rolled steel sheet by passing it through a DFF (Direct Fired Furnace) facility such that an exit side temperature becomes 630-670°C; reduction heat-treating the oxidation heat-treated cold-rolled steel sheet in a reducing atmosphere having a dew point of at least - 60°C and less than -45°C; and obtaining a Zn-Mg-Al-based hot-dip galvanized steel sheet by immersing the reduction heat-treated cold-rolled steel sheet in a Zn-Mg-Al-based hot-dip plating bath, wherein the DFF facility comprises four or more zones, and is controlled to satisfy Equation 1 below: [Equation 1] (air ratio of last zone - 1) × (air ratio of second to last zone - 1) ≥ 0.

7. The method of claim 6, wherein the slab further comprises at least one selected from C: 0.050-0.30%, P: 0.10% or less (excluding 0%), S: 0.010% or less (excluding 0%), Al: 0.010-0.10%, N: 0.0080% or less(excluding 0%), and B: 0.00010-0.0030%.

8. The method of claim 6, wherein the heating of the slab is performed at 1100-1300°C.

9. The method of claim 6, wherein the finish hot-rolling is performed at 800-1000°C.

10. The method of claim 6, wherein the reducing atmosphere comprises, by volume %, hydrogen: 3-25% and a remainder of nitrogen.

11. The method of claim 6, wherein each of the four or more zones has an air ratio of 1.0 or more.

12. The method of claim 6, wherein the Zn-Mg-Al-based hot-dip plating bath comprises, by weight %, Mg: 1.0-13.0%, Al: 1.0-36.0%, and a remainder of Zn and unavoidable impurities.

13. The method of claim 6, wherein the Zn-Mg-Al-based hot-dip plating bath further comprises at least one selected from the following groups (a) to (h): (a) at least one of Si: 0.5% or less and Ni: 0.5% or less; (b) at least one of Ca: 1.0% or less, La: 0.1% or less, Ce: 0.1% or less, Y: 0.1% or less, and Sr: 1.0% or less; (c) Ti: 0.1% or less; (d) W: 0.5% or less; (e) Cu: 2.0% or less; (f) at least one of Fe: 1.0% or less, Cr: 0.5% or less, Mn: 0.5% or less, and V: 0.5% or less; (g) at least one of B: 0.1% or less and P: 0.1% or less; and (h) at least one of Sn: 1.0% or less, Sb: 1.0% or less, and Bi: 1.0% or less.
